(19) Europäisches Patentamt
European Patent Office
Office européen des brevets

(11) **EP 3 055 683 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(21) Anmeldenummer: **14776640.6**

(22) Anmeldetag: **25.09.2014**

(51) Int Cl.:
*G01N 21/958* (2006.01)    *G01B 11/26* (2006.01)

(86) Internationale Anmeldenummer:
**PCT/EP2014/070534**

(87) Internationale Veröffentlichungsnummer:
**WO 2015/052010 (16.04.2015 Gazette 2015/15)**

(54) **VORRICHTUNG UND VERFAHREN ZUM VERMESSEN VON SCHEIBEN, INSBESONDERE VON WINDSCHUTZSCHEIBEN VON FAHRZEUGEN**

DEVICE AND METHOD FOR MEASURING PANES, IN PARTICULAR WINDSCREENS OF VEHICLES

DISPOSITIF ET PROCÉDÉ DE MESURAGE DE VITRES, EN PARTICULIER DE PARE-BRISES DE VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2013 DE 202013008910 U**

(43) Veröffentlichungstag der Anmeldung:
**17.08.2016 Patentblatt 2016/33**

(73) Patentinhaber: **Möller-Wedel Optical GmbH**
**22880 Wedel (DE)**

(72) Erfinder: **GRUBERT, Bernd**
**22880 Wedel (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
**DE-A1-102011 003 803     US-A- 4 249 823**
**US-A- 4 310 242     US-A- 4 837 449**
**US-A- 5 187 541     US-A- 5 726 749**
**US-A1- 2010 232 677     US-A1- 2011 189 426**

EP 3 055 683 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anordnung umfassend eine Vorrichtung zum Vermessen von Scheiben, insbesondere von Windschutzscheiben von Fahrzeugen, sowie eine zu vermessende Scheibe. Die Vorrichtung umfasst eine Lichtquelle und einen Lichtsensor, die so angeordnet sind, dass ein von der Lichtquelle ausgehender Lichtstrahl durch die Scheibe hindurchtritt und auf den Lichtsensor trifft. Die Erfindung betrifft außerdem ein Verfahren zum Vermessen von Scheiben.

Trifft ein Lichtstrahl unter einem Einfallswinkel auf eine Scheibe, der mit der Scheibennormalen einen Winkel ungleich 0° einschließt, so kann es in der Scheibe zu einer internen Reflexion kommen, durch die der Lichtstrahl in einen Primärstrahl und einen Sekundärstrahl aufgespalten wird. Ein Betrachter, der durch die Scheibe hindurch auf die Lichtquelle blickt, sieht ein Doppelbild der Lichtquelle. Ein Doppelbild entsteht insbesondere, wenn die Scheibe in dem betreffenden Bereich keilförmig ist, die beiden Außenflächen also nicht parallel zueinander sind, oder wenn die Scheibe dort eine Krümmung hat.

Solche Doppelbilder werden beispielsweise bei Windschutzscheiben von Fahrzeugen als störend empfunden, wenn bei Dunkelheit das Licht eines entgegenkommenden Fahrzeugs doppelt sichtbar wird. Es ist bekannt, Windschutzscheiben hinsichtlich der Entstehung von Doppelbildern zu vermessen. Insbesondere interessiert der Doppelbildwinkel, also der Winkel, den der Primärstrahl und der Sekundärstrahl miteinander einschließen. Es wird dazu ein Lichtstrahl durch die Scheibe hindurch auf einen Lichtsensor geleitet und ermittelt, wie groß der Abstand zwischen dem Primärstrahl und dem Sekundärstrahl auf dem Lichtsensor ist. Entsprechende Vorrichtungen zur Vermessung von Doppelbildwinkeln sind aus der US 2010/0232677 A1 und aus der US 4,310,242 bekannt.

Es stellt sich bei diesen Messungen das Problem, dass es nicht ganz einfach ist, den Primärstrahl und den Sekundärstrahl auf einem Lichtsensor zu messen, da der Primärstrahl regelmäßig um ein Vielfaches heller ist als der Sekundärstrahl.

Der Erfindung liegt die Aufgabe zu Grunde, eine Anordnung sowie ein Verfahren vorzustellen, mit der bzw. mit dem die von einer Scheibe erzeugten Doppelbilder einfacher vermessen werden können. Die Aufgabe wird gelöst mit einer Anordnung gemäß dem Anspruch 1 sowie mit einem Verfahren gemäß dem Anspruch 13. Vorteilhafte Ausführungsform sind in den Unteransprüchen angegeben.

Erfindungsgemäß weist der Lichtstrahl eine lineare Polarisation auf, wobei die Polarisationsrichtung einen Winkel zwischen 50° und 130° mit der Einfallsebene einschließt. Die Einfallsebene wird aufgespannt von der Achse des auf die Scheibe auftreffenden Lichtstrahls und der Scheibennormalen an dem Ort, an dem der Lichtstrahl auf die Scheibe trifft.

Zunächst werden einige Begriffe erläutert. Ein Lichtstrahl kann als Überlagerung einer Vielzahl elektromagnetischer Wellen beschrieben werden, wobei jede einzelne Welle eine lineare Polarisationsrichtung hat, die senkrecht zur Ausbreitungsrichtung des Lichts ausgerichtet ist. Der durch Überlagerung der Einzelwellen gebildete Lichtstrahl hat eine lineare Polarisation, wenn die Einzelwellen der betreffenden Polarisationsrichtung in dem Lichtstrahl mit höherer Intensität vertreten sind als andere Polarisationsrichtungen. Für die Erfindung wäre es ideal, wenn der Lichtstrahl ausschließlich aus Einzelwellen der betreffenden linearen Polarisationsrichtung zusammengesetzt wäre. In der Praxis wird sich dies meist nicht verwirklichen lassen, sondern man wird sich damit begnügen, dass die betreffende Polarisationsrichtung in beträchtlich höherer Intensität vertreten ist als andere Polarisationsrichtungen. Die Scheibe ist durchsichtig, so dass der Lichtstrahl hindurchtreten kann. Die Scheibe besteht vorzugsweise aus einem Material, dessen Brechungsindex größer ist als der Brechungsindex von Luft.

Mit der Erfindung wird vorgeschlagen, beim Vermessen der Scheibe die lineare Polarisation des Lichtstrahls gezielt relativ zu der Einfallsebene des Lichtstrahls auszurichten. Die Einfallsebene wird aufgespannt durch die Achse des Lichtstrahls und die Scheibennormale an dem Ort, an dem der Lichtstrahl auf die Scheibe auftrifft. Die Scheibennormale bezeichnet die Achse, die rechtwinklig ist zu einer imaginären Tangentialebene, die an dem Ort, an dem der Lichtstrahl auftrifft, auf die Scheibe gelegt wird. Die Lichtquelle sollte so angeordnet sein, dass der Lichtstrahl nicht mit der Scheibennormalen zusammenfällt. Erfindungsgemäß schließt die Polarisationsrichtung des Lichtstrahls mit der Einfallsebene einen Winkel zwischen 50° und 130° ein. Wenn der Lichtstrahl mit einer solchen Polarisationsrichtung auf die Scheibe auftrifft, erhöht sich die Helligkeit des Sekundärstrahls und es wird leichter, den Primärstrahl und den Sekundärstrahl zu messen. Der Lichtsensor ist so bemessen, dass sowohl der Primärstrahl als auch der Sekundärstrahl des Lichtstrahls auf den Lichtsensor auftreffen.

Der Unterschied in der Helligkeit zwischen dem Primärstrahl und dem Sekundärstrahl rührt daher, dass der Primärstrahl die Scheibe direkt durchquert, während der Sekundärstrahl zwei zusätzliche Reflexionen im Inneren der Scheibe erfährt. Wie groß der Anteil des reflektierten Lichts im Verhältnis zu dem Anteil des transmittierten Lichts ist, hängt unter anderem von der Polarisationsrichtung des Lichts ab. Gemäß der Erfindung wird die Polarisationsrichtung des Lichts so gewählt, dass ein erhöhter Anteil des Lichts im Inneren der Scheibe reflektiert wird, also zur Helligkeit des Sekundärstrahls beiträgt. Die höchste Helligkeit des Sekundärstrahls wird erreicht, wenn die Polarisationsrichtung des Lichtstrahls mit der Einfallsebene einen Winkel von 90° einschließt. Die Helligkeit des Sekundärstrahls ist dann um etwa den Faktor 2 höher als bei einem nicht-polarisierten Lichtstrahl. Eine relevante Erhöhung der Helligkeit stellt sich ein im Winkelbereich zwischen 50° und 130°. Bevorzugt liegt der Winkel zwischen 70° und 110°, weiter bevorzugt zwischen 80° und 100°.

Nach dem Austritt aus der Scheibe sind der Primärstrahl und der Sekundärstrahl räumlich voneinander getrennt, so dass sie mit dem Lichtsensor getrennt voneinander ausgewertet werden können. Abhängig von dem Keilwinkel und der Krümmung der Scheibe schließen der Primärstrahl und der Sekundärstrahl einen Winkel zwischen sich ein, was zur Folge hat, dass der Abstand zwischen beiden Strahlen sich mit dem Abstand zur Scheibe vergrößert.

Der Lichtsensor kann eine Auswerteeinheit aufweisen, die die Position des Primärstrahls und des Sekundärstrahls auf dem Lichtsensor automatisch ermittelt. Durch eine solche Auswerteeinheit wird es möglich, das Vermessen der Scheibe insgesamt zu automatisieren. Es können bestimmte Eigenschaften der Scheibe automatisch berechnet werden, beispielsweise ob die Scheibe in Einklang mit bestimmten Normen steht. Auf einem Display der Auswerteeinheit kann eine entsprechende Information ausgegeben werden.

Für die Vermessung ist es von Vorteil, einen konzentrierten Lichtstrahl zu verwenden, dessen Ausdehnung quer zur Ausbreitungsrichtung klein ist. Wenn der Lichtstrahl kollimiert ist, ist das Messergebnis unabhängig von dem Abstand zwischen der Lichtquelle und der Scheibe. Einen kollimierten Lichtstrahl kann man beispielsweise erhalten, indem man eine geeignete Kollimationslinse zwischen der Lichtquelle und der Scheibe anordnet. In einer bevorzugten Ausführungsform wird als Lichtquelle ein Laser verwendet, der von sich aus einen kollimierten Lichtstrahl abgibt.

Die lineare Polarisation kann der Lichtstrahl dadurch erhalten, dass der Lichtstrahl zwischen der Lichtquelle und der Scheibe durch einen geeigneten Polarisationsfilter hindurchtritt. Der Polarisationsfilter ist durchlässig für Licht der betreffenden Polarisationsrichtung, während andere Polarisationsrichtungen gedämpft oder vorzugsweise ganz unterdrückt werden. Zusätzlich oder alternativ dazu kann Lichtquelle verwendet werden, in Betracht kommt beispielsweise die Verwendung eines He-Ne-Lasers mit geeigneter linearer Polarisation.

Die Ausrichtung der Einfallsebene kann davon abhängen, an welcher Stelle der Lichtstrahl auf die Scheibe auftrifft. Um die Polarisationsrichtung an unterschiedliche Einfallsebenen anpassen zu können, ist es von Vorteil, wenn der Polarisationsfilter bzw. die Lichtquelle so gestaltet sind, dass die lineare Polarisationsrichtung einstellbar ist. Vorzugsweise ist das betreffende Element um die Achse des Lichtstrahls drehbar gelagert.

Schließen der Primärstrahl und der Sekundärstrahl einen Winkel zwischen sich ein, ist der Abstand zwischen den beiden Strahlen abhängig davon, in welcher Entfernung von der Scheibe man misst. Im Allgemeinen ist folglich eine exakte Einstellung des Abstands zwischen der Scheibe und dem Lichtsensor erforderlich, um aus der Position des Primärstrahls und des Sekundärstrahls auf dem Lichtsensor Rückschlüsse auf die Eigenschaften der Scheibe ziehen zu können.

In einer vorteilhaften Ausführungsform ist zwischen der Scheibe und dem Lichtsensor eine Sammellinse angeordnet, durch die der Primärstrahl und der Sekundärstrahl hindurchtreten. Wenn der Lichtsensor in der Brennebene der Sammellinse angeordnet ist, ist die Position von Primärstrahl und Sekundärstrahl auf dem Lichtsensor unabhängig von dem Abstand zwischen der Scheibe und der Sammellinse. Die Vorrichtung kann so gestaltet sein, dass der Lichtsensor und die Sammellinse Bestandteile eines Analysegeräts sind, in dem der Lichtsensor und die Sammellinse in einem festen Abstand zueinander gehalten sind. Das Vermessen der Scheibe wird auf diese Weise erleichtert, weil der Lichtsensor den passenden Abstand zu der Sammellinse hat und der Abstand zwischen der Sammellinse und der Scheibe die Messung nicht beeinflusst. Die betreffende Justage entfällt folglich.

Es ist nicht erforderlich, dass die erfindungsgemäße Sammellinse eine Einzellinse ist. Vielmehr lässt sich die gleiche Wirkung erzielen, wenn die Sammellinse ein Linsensystem aus einer Mehrzahl von Einzellinsen ist und der Lichtsensor in der Brennebene des Linsensystems angeordnet ist. Der Durchmesser der Sammellinse ist vorzugsweise größer als 30 mm und kann beispielsweise zwischen 40 mm und 60 mm liegen. Mit dieser Größe ist die Sammellinse regelmäßig geeignet, sowohl den Primärstrahl als auch den Sekundärstrahl einzufangen.

Auch wenn man die Polarisationsrichtung des Lichtstrahls gemäß der Erfindung einstellt, ist der Primärstrahl noch um ein Vielfaches heller als der Sekundärstrahl. Die Helligkeit des Primärstrahls kann beispielsweise um den Faktor 30 höher sein als die Helligkeit des Sekundärstrahls. Übliche Lichtsensoren ermitteln die Helligkeit des eintreffenden Lichts mit einem Dynamikumfang von 8 Bit bei linearer Auflösung. Es können also 256 Helligkeitsstufen unterschieden werden. Die Helligkeitsstufen sind linear, was bedeutet, dass der Helligkeitsunterschied zwischen zwei benachbarten Helligkeitsstufen über die gesamte Bandbreite im Wesentlichen gleich ist.

Mit einem solchen Lichtsensor ist es schwierig, den Primärstrahl und den Sekundärstrahl gleichzeitig zu messen, weil der Helligkeitsunterschied der beiden Strahlen im Wesentlichen den gesamten Dynamikumfang des Lichtsensors überdeckt. Stellt man die Empfindlichkeit des Lichtsensors so ein, dass der Primärstrahl den obersten Helligkeitsstufen entspricht, geht der Sekundärstrahl nahezu im Rauschen unter. Erhöht man die Empfindlichkeit, so dass der Sekundärstrahl eindeutig gemessen werden kann, wird der Lichtsensor durch den Primärstrahl übersteuert.

Im Rahmen der Erfindung kann deswegen ein Lichtsensor verwendet werden, dessen Dynamikumfang größer als 8 Bit bei linearer Auflösung ist. In einer vorteilhaften Ausführungsform entspricht der Dynamikumfang mindestens 12 Bit bei linearer Auflösung. Zur Vergrößerung des Dynamikumfangs kann es beitragen, einen Lichtsensor mit nicht-linearer Auflösung zu wählen. Vorzugsweise ist die nicht-lineare Auflösung so gewählt, dass der Helligkeitsunterschied zweier benachbarter Helligkeitsstufen mit größer werdender Helligkeit ansteigt. In einer bevorzugten Ausführungsform hat der Lichtsensor eine logarithmische Auflösung. Dass ein Lichtsensor mit logarithmischer Auflösung im Allgemeinen weniger geeignet ist, nahe beieinander liegende Helligkeitsstufen zu unterscheiden, ist im Rahmen der Erfindung kein relevanter Nachteil, weil nur zwei Lichtstrahlen zu erfassen sind, deren Helligkeit sich erheblich unterscheidet.

Der Lichtsensor hat vorzugsweise eine Sensorfläche, die mit einer Vielzahl von Pixeln bedeckt ist. Die erfindungsgemäße Auflösung wird vorzugsweise für die einzelnen Pixel bereitgestellt.

Die Erfindung betrifft außerdem ein Verfahren zum Vermessen von Scheiben. Bei dem Verfahren wird ein Lichtstrahl durch eine Scheibe hindurch auf einen Lichtsensor geleitet. Erfindungsgemäß weist der Lichtstrahl eine lineare Polarisation auf. Die Polarisationsrichtung schließt einen Winkel zwischen 50° und 130° mit der Einfallsebene ein. Die Einfallsebene wird aufgespannt von der Achse des Lichtstrahls und der Scheibennormalen an dem Ort, an dem der Lichtstrahl auf die Scheibe trifft. Das Verfahren kann mit weiteren Merkmalen fortgebildet werden, die im Zusammenhang der erfindungsgemäßen Vorrichtung beschrieben sind.

Die Erfindung wird nachfolgend unter Bezugnahme auf die beigefügten Zeichnungen anhand vorteilhafter Ausführungsform beispielhaft beschrieben. Es zeigen:

Fig. 1:  eine schematische Darstellung einer erfindungsgemäßen Anordnung;

Fig. 2:  einen vergrößerten Ausschnitt aus Fig. 1 bei einer Scheibe mit Keilwinkel;

Fig. 3:  einen vergrößerten Ausschnitt aus Fig. 1 bei einer gekrümmten Scheibe;

Fig. 4:  eine vergrößerte Schnittdarstellung entlang Linie A-A in Fig. 1; und

Fig. 5:  ein Blockdiagramm einer erfindungsgemäßen Auswerteeinheit.

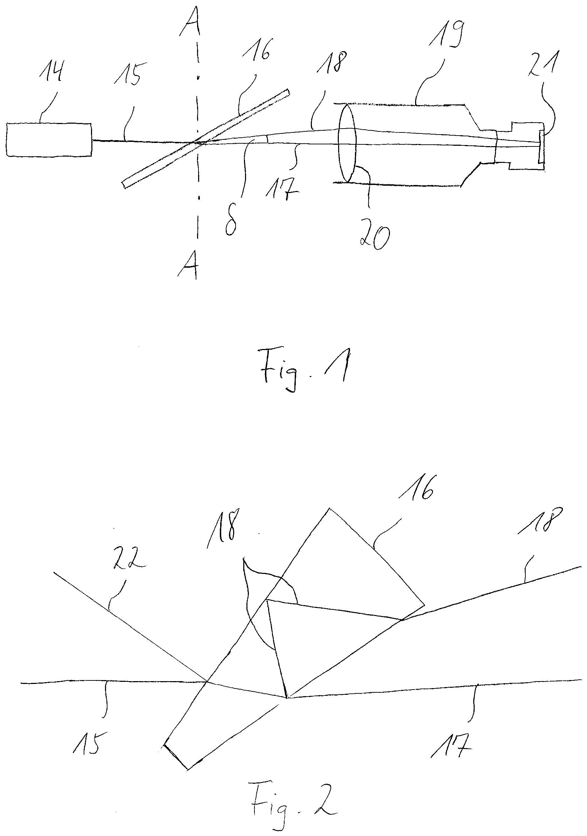

Eine erfindungsgemäße Anordnung in Fig. 1 umfasst eine Lichtquelle 14 in Form eines He-Ne-Lasers. Die Lichtquelle 14 sendet einen kollimierten Lichtstrahl 15 in Richtung einer zu vermessenden Windschutzscheibe 16 eines Kraftfahrzeugs. Der Lichtstrahl 15 trifft unter einem spitzen Winkel auf die Scheibe 16. Beim Durchtritt durch die Scheibe 16 wird der Lichtstrahl in einen Primärstrahl 17 und einen Sekundärstrahl 18 aufgespalten, die beim Verlassen der Scheibe 16 einen Doppelbildwinkel δ zwischen sich einschließen.

Der Primärstrahl 17 und der Sekundärstrahl 18 werden mit einem Analysegerät 19 aufgefangen. Das Analysegerät 19 umfasst ein röhrenförmiges Gehäuse, an dessen vorderem Ende eine Sammellinse 20 angeordnet ist. Die Sammellinse 20 bildet ein Objektiv des Analysegeräts 19, durch das der Primärstrahl 17 und Sekundärstrahl 18 in das Gehäuse eintreten. Am anderen Ende des Gehäuses ist ein Lichtsensor 21 angeordnet, auf den der Primärstrahl 17 und der Sekundärstrahl 18 treffen. Bei dem Lichtsensor 21 kann es sich beispielsweise um eine CCD-Kamera handeln. Der Abstand zwischen der Sammellinse 20 und dem Lichtsensor 21 entspricht der Brennweite der Sammellinse 20, der Lichtsensor 21 ist also in der Brennebene der Sammellinse 20 angeordnet. Die Sammellinse 20 kann beispielsweise einen Durchmesser von 50 mm und eine Brennweite von 300 mm haben.

Der Primärstrahl 17 und der Sekundärstrahl 18 treffen mit einem Abstand d zueinander auf dem Lichtsensor 21 auf. Da der Lichtsensor 21 in der Brennebene der Sammellinse 21 angeordnet ist, ist der Abstand d nicht abhängig von dem Abstand zwischen der Sammellinse 20 und der Scheibe 16. Es ist also nicht erforderlich, das Analysegerät 19 in einen exakt definierten Abstand zu der Scheibe 16 zu bringen. Aus dem Abstand d kann der Doppelbildwinkel δ nach folgender Formel ermittelt werden:

$$\delta = \arctan\frac{d}{f} \approx \frac{d}{f}$$

Dabei steht f für die Brennweite der Sammellinse 20. Für kleine Winkel (kleiner 0,1 Radiant) ergibt sich der Doppelbildwinkel δ näherungsweise als Quotient aus d und f. Aus dem Doppelbildwinkel δ lassen sich Rückschlüsse auf Eigenschaften der Scheibe 16 ziehen, beispielsweise auf geometrische Eigenschaften in dem Bereich, in dem der Lichtstrahl 15 durch die Scheibe 16 hindurch getreten ist.

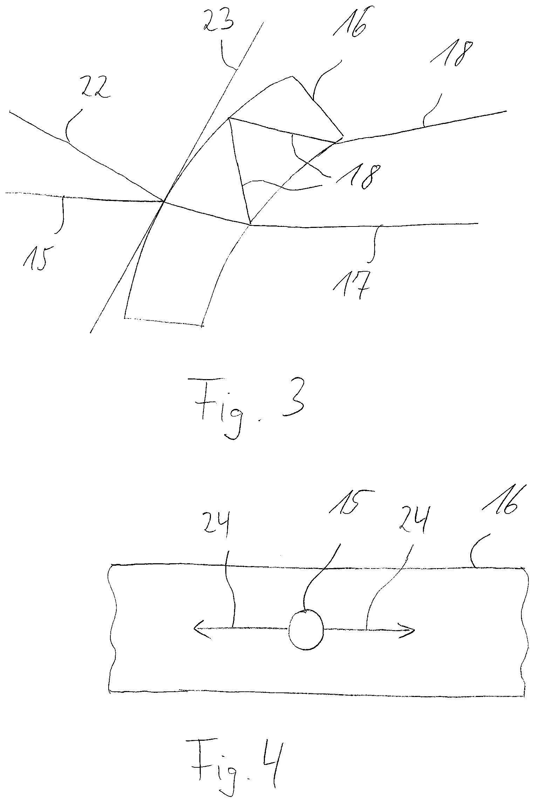

Die Aufspaltung des Lichtstrahls 15 in den Primärstrahl 17 und den Sekundärstrahl 18 ergibt sich gemäß Fig. 2 beispielsweise beim Durchtritt des Lichtstrahls 15 durch eine Scheibe 16, die einen Keilwinkel aufweist, bei der also die beiden Außenflächen nicht parallel zueinander sind. Zu einer entsprechenden Aufspaltung in Primärstrahl 17 und Sekundärstrahl 18 kommt es gemäß Fig. 3 beim Durchtritt des Lichtstrahls 15 durch eine gekrümmte Scheibe 16. Aus dem Doppelbildwinkel δ lassen sich beispielsweise Rückschlüsse auf den Keilwinkel oder den Krümmungsradius der Scheibe 16 ziehen. Außerdem kann durch Vergleich mit entsprechenden Grenzwerten festgestellt werden, ob der Doppelbildwinkel δ selbst den Vorgaben entspricht.

Der von der Lichtquelle 14 kommende Lichtstrahl 15 spannt mit der Scheibennormalen 22 die Einfallsebene auf. Die Scheibennormale 22 steht senkrecht auf der Scheibe 16 an dem Ort, an dem der Lichtstrahl 15 auf die Scheibe 16 trifft. Bei einer Gekrümmtenscheibe 16 steht die Scheibennormale 22 senkrecht auf der Tangentialebene 23, die an der betreffenden Stelle an die Scheibe 16 angelegt ist, siehe Fig. 3.

Der von der Lichtquelle 14 erzeugte Lichtstrahl 15 ist kollimiert und weist eine lineare Polarisation auf. Die Polarisationsrichtung 24, die in Fig. 4 mit zwei Pfeilen angedeutet ist, ist senkrecht zu der Einfallsebene 15, 22 ausgerichtet. Im Vergleich mit einem nicht-polarisiertem Lichtstrahl erhöht sich die Helligkeit des Sekundärstrahls 18 durch diese Wahl der Polarisationsrichtung etwa um den Faktor 2.

Bei dem Lichtsensor 21 handelt es sich um einen Matrixsensor, der eine Matrix aus lichtempfindlichen Fotodioden aufweist. In jeder Fotodiode wird mit dem Auftreffen eines Lichtstrahls eine Anzahl von Ladungsträgern freigesetzt, die proportional zur Helligkeit ist. Anhand der Zahl der Ladungsträger wird eine Helligkeitsstufe ermittelt und es wird eine Zuordnung zwischen der Fotodiode und der Helligkeitsstufe vorgenommen. Bei der klassischen linearen Zuordnung steigt die Zahl der Ladungsträger von Helligkeitsstufe zu Helligkeitsstufe linear an, was zur Folge hat, dass der Dynamikumfang des Lichtsensors 21 begrenzt ist.

Für die erfindungsgemäße Vorrichtung ist ein vergrößerter Dynamikumfang gewünscht, weswegen der Lichtsensor 21 eine logarithmische Auflösung hat. Die Zahl der freigesetzten Ladungsträger steigt also von Helligkeitsstufe zu Helligkeitsstufe exponentiell an. Dadurch hat der Lichtsensor 21 einen erhöhten Dynamikumfang und es wird möglich, mit dem Lichtsensor 21 sowohl den Primärstrahl 17 als auch den Sekundärstrahl 18 hinreichend genau zu ermitteln, auch wenn der Primärstrahl 17 beispielsweise um den Faktor 30 heller ist als der Sekundärstrahl 18.

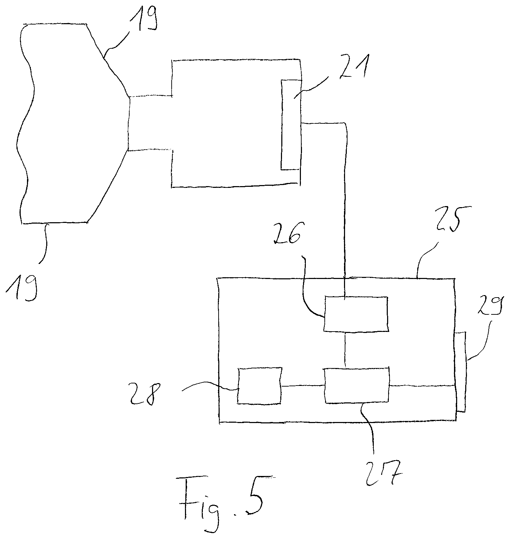

Gemäß Fig. 5 werden die digitalen Werte von dem Lichtsensor 21 zu einer Auswerteeinheit 25 geleitet und dort in einem Speicher 26 abgelegt. Ein Rechenbaustein 27 ermittelt aus den in dem Speicher 26 abgelegten Werten den Abstand d, mit dem der Primärstrahl 17 und der Sekundärstrahl 18 auf den Lichtsensor 21 auftreffen. Anhand der bekannten Brennweite f der Sammellinse 20 kann in einem weiteren Rechenschritt der Doppelbildwinkel δ ermittelt werden, den der Primärstrahl 17 und der Sekundärstrahl 18 beim Austritt aus der Scheibe 16 miteinander einschließen. In einem zweiten Speicher 28 ist ein Sollwert für den Doppelbildwinkel δ hinterlegt. Der Rechenbaustein 27 vergleicht den ermittelten Wert mit dem Wert aus dem Speicher 28 und gibt auf einer Anzeige 29 eine Information aus, ob die Scheibe 16 den Vorgaben genügt.

## Patentansprüche

1. Anordnung umfassend eine Vorrichtung zum Vermessen von Scheiben und eine zu vermessende Scheibe (16), wobei die Vorrichtung eine Lichtquelle (14) und einen Lichtsensor (21) umfasst, die so angeordnet sind, dass ein von der Lichtquelle (14) ausgehender Lichtstrahl (15) durch die Scheibe (16) hindurchtritt und auf den Lichtsensor (21) trifft, wobei der Lichtsensor (21) so bemessen ist, dass sowohl ein Primärstrahl(17) als auch ein Sekundärstrahl (18) des Lichtstrahls (15) auf den Lichtsensor (21) auftreffen, **dadurch gekennzeichnet, dass** der Lichtstrahl (15) eine lineare Polarisation aufweist, wobei die Lichtquelle (14) zur Aussendung von linear polarisiertem Licht ausgebildet ist und/oder zwischen Lichtquelle (14) und Scheibe (16) ein Polarisationsfilter angeordnet ist, wobei die Polarisationsrichtung (24) einstellbar ist, wobei die Polarisationsrichtung (24) einen Winkel zwischen 50° und 130° einschließt mit einer Einfallsebene (15, 22), die aufgespannt wird von der Achse des Lichtstrahls (15) und der Scheibennormalen (22) an dem Ort, an dem der Lichtstrahl (15) auf die Scheibe (16) trifft.

2. Anordnung nach Anspruch 1, **dadurch gekennzeichnet, dass** die Polarisationsrichtung (24) mit der Einfallsebene (15, 22) einen Winkel einschließt, der zwischen 70° und 110°, vorzugsweise zwischen 80° und 100° liegt.

3. Anordnung nach Anspruch 1 oder 2, **dadurch gekennzeichnet, dass** der Lichtsensor (21) eine Auswerteeinheit (25) aufweist, die die Position des Primärstrahls (17) und des Sekundärstrahls (18) auf dem Lichtsensor (21) automatisch ermittelt.

4. Anordnung nach einem der Ansprüche 1 bis 3, **dadurch gekennzeichnet, dass** der Lichtstrahl (15) kollimiert ist.

5. Anordnung nach einem der Ansprüche 1 bis 4, **dadurch gekennzeichnet, dass** die Lichtquelle (14) ein Laser ist.

6. Anordnung nach einem der Ansprüche 1 bis 5, **dadurch gekennzeichnet, dass** die lineare Polarisationsrichtung (24) einstellbar ist.

7. Anordnung nach einem der Ansprüche 1 bis 6, **dadurch gekennzeichnet, dass** zwischen der Scheibe (16) und dem Lichtsensor (21) eine Sammellinse (20) angeordnet ist, durch die der Lichtstrahl (17, 18) hindurchtritt.

8. Anordnung nach Anspruch 7, **dadurch gekennzeichnet, dass** der Lichtsensor (21) in der Brennebene der Sammellinse (20) angeordnet ist.

9. Anordnung nach einem der Ansprüche 1 bis 8, **dadurch gekennzeichnet, dass** der Dynamikumfang des Lichtsensors (21) größer ist als 8 Bit.

10. Anordnung nach Anspruch 9, **dadurch gekennzeichnet, dass** der Dynamikumfang des Lichtsensors (21) mindestens 12 Bit ist.

**11.** Anordnung nach Anspruch 9 oder 10, **dadurch gekennzeichnet, dass** der Lichtsensor (21) eine nichtlineare Auflösung hat, so dass der Helligkeitsabstand zweier benachbarter Helligkeitsstufen mit größer werdender Helligkeit ansteigt.

**12.** Anordnung nach einem der Ansprüche 9 bis 11, **dadurch gekennzeichnet, dass** der Lichtsensor (21) eine logarithmische Auflösung hat.

**13.** Verfahren zum Vermessen von Scheiben mit folgenden Schritten:

a. Leiten eines linear polarisierten Lichtstrahls (15) durch eine Scheibe (16) hindurch auf einen Lichtsensor (21), so dass die Polarisationsrichtung (24) einen Winkel zwischen 50° und 130° mit einer Einfallsebene (15, 22) einschließt, wobei die Einfallsebene (15, 22) aufgespannt wird von der Achse des Lichtstrahls (15) und der Scheibennormalen (22) an dem Ort, an dem der Lichtstrahl (15) auf die Scheibe trifft;
b. Ermitteln der Position eines Primärstrahls (17) auf dem Lichtsensor (21);
c. Ermitteln der Position eines Sekundärstrahls (18) auf dem Lichtsensor (21).

**Claims**

**1.** Arrangement comprising an apparatus for measuring panes and a pane (16) to be measured, wherein the apparatus comprises a light source (14) and a light sensor (21) which are arranged in such a way that a light beam (15) emanating from the light source (14) passes through the pane (16) and impinges on the light sensor (21), wherein the light sensor (21) is dimensioned such that both a primary beam (17) and a secondary beam (18) of the light beam (15) impinge on the light sensor (21), **characterized in that** the light beam (15) has a linear polarization, wherein the light source (14) is embodied to emit linearly polarized light and/or a polarization filter is arranged between the light source (14) and the pane (16), wherein the polarization direction (24) is adjustable, wherein the polarization direction (24) includes an angle of between 50° and 130° with a plane of incidence (15, 22), which is spanned by the axis of the light beam (15) and the pane normal (22) at the site at which the light beam (15) impinges on the pane (16).

**2.** Arrangement according to Claim 1, **characterized in that** the polarization direction (24) includes an angle with the plane of incidence (15, 22) that lies between 70° and 110°, preferably between 80° and 100°.

**3.** Arrangement according to Claim 1 or 2, **characterized in that** the light sensor (21) has an evaluation unit (25), which automatically ascertains the position of the primary beam (17) and of the secondary beam (18) on the light sensor (21).

**4.** Arrangement according to any one of Claims 1 to 3, **characterized in that** the light beam (15) is collimated.

**5.** Arrangement according to any one of Claims 1 to 4, **characterized in that** the light source (14) is a laser.

**6.** Arrangement according to any one of Claims 1 to 5, **characterized in that** the linear polarization direction (24) is adjustable.

**7.** Arrangement according to any one of Claims 1 to 6, **characterized in that** a converging lens (20), through which the light beam (17, 18) passes, is arranged between the pane (16) and the light sensor (21).

**8.** Arrangement according to Claim 7, **characterized in that** the light sensor (21) is arranged in the focal plane of the converging lens (20).

**9.** Arrangement according to any one of Claims 1 to 8, **characterized in that** the dynamic range of the light sensor (21) is greater than 8 bit.

**10.** Arrangement according to Claim 9, **characterized in that** the dynamic range of the light sensor (21) is at least 12 bit.

**11.** Arrangement according to Claim 9 or 10, **characterized in that** the light sensor (21) has a non-linear resolution such that the brightness difference of two adjacent brightness levels increases with increasing brightness.

**12.** Arrangement according to any one of Claims 9 to 11, **characterized in that** the light sensor (21) has a logarithmic resolution.

**13.** Method for measuring panes including the following steps:

a. guiding a linearly polarized light beam (15) onto a light sensor (21) through a pane (16) such that the polarization direction (24) includes an angle of between 50° and 130° with a plane of incidence (15, 22), wherein the plane of incidence (15, 22) is spanned by the axis of the light beam (15) and the pane normal (22) at the site at which the light beam (15) impinges on the pane (16);
b. ascertaining the position of a primary beam (17) on the light sensor (21);

c. ascertaining the position of a secondary beam (18) on the light sensor (21).

**Revendications**

1. Système comprenant un dispositif de mesurage de vitres et une vitre (16) à mesurer, dans lequel le dispositif comprend une source lumineuse (14) et un photocapteur (21) disposés de telle manière qu'un rayon lumineux (15) émis par la source lumineuse (14) traverse la vitre (16) et vient frapper le photocapteur (21), dans lequel le photocapteur (21) est dimensionné de telle manière qu'un rayon primaire (17) et qu'un rayon secondaire (18) du rayon lumineux (15) frappent tous deux le photocapteur (21), **caractérisé en ce que** le rayon lumineux (15) possède une polarisation linéaire, dans lequel la source lumineuse (14) est conçue pour émettre une lumière polarisée linéairement et/ou dans lequel un filtre de polarisation est disposé entre la source lumineuse (14) et la vitre (16), dans lequel la direction de polarisation (24) est réglable, dans lequel la direction de polarisation (24) fait un angle compris entre 50° et 130° avec un plan d'incidence (15, 22) passant par l'axe du rayon lumineux (15) et par la normale à la vitre (22) à l'endroit où le rayon lumineux (15) frappe la vitre (16).

2. Système selon la revendication 1, **caractérisé en ce que** la direction de polarisation (24) fait avec le plan d'incidence (15, 22) un angle compris entre 70° et 110°, de préférence entre 80° et 100°.

3. Système selon la revendication 1 ou 2, **caractérisé en ce que** le photocapteur (21) comporte une unité d'évaluation (25) qui détermine automatiquement la position du rayon primaire (17) et du rayon secondaire (18) sur le photocapteur (21).

4. Système selon l'une des revendications 1 à 3, **caractérisé en ce que** le rayon lumineux (15) est collimaté.

5. Système selon l'une des revendications 1 à 4, **caractérisé en ce que** la source lumineuse (14) est un laser.

6. Système selon l'une des revendications 1 à 5, **caractérisé en ce que** la direction de polarisation linéaire (24) est réglable.

7. Système selon l'une des revendications 1 à 6, **caractérisé en ce qu'**il est prévu entre la vitre (16) et le photocapteur (21) une lentille convergente (20) à travers laquelle passe le rayon lumineux (17, 18).

8. Système selon la revendication 7, **caractérisé en ce que** le photocapteur (21) est disposé dans le plan focal de la lentille convergente (20).

9. Système selon l'une des revendications 1 à 8, **caractérisé en ce que** la gamme dynamique du photocapteur (21) est supérieure à 8 bits.

10. Système selon la revendication 9, **caractérisé en ce que** la gamme dynamique du photocapteur (21) est d'au moins 12 bits.

11. Système selon la revendication 9 ou 10, **caractérisé en ce que** le photocapteur (21) possède une résolution non linéaire de sorte que l'intervalle de luminosité entre deux niveaux de luminosité adjacents augmente lorsque la luminosité augmente.

12. Système selon l'une des revendications 9 à 11, **caractérisée en ce que** le photocapteur (21) possède une résolution logarithmique.

13. Procédé de mesurage de vitres, comprenant les étapes consistant à :

    a. diriger un rayon lumineux polarisé linéairement (15) à travers une vitre (16) sur un photocapteur (21) de telle manière que la direction de polarisation (24) forme un angle compris entre 50° et 130° avec un plan d'incidence (15, 22), dans lequel le plan d'incidence (15, 22) passe par l'axe du rayon lumineux (15) et par la normale à la vitre (22) à l'endroit où le rayon lumineux (15) frappe la vitre ;
    b. déterminer la position d'un rayon primaire (17) sur le photocapteur (21) ;
    c. déterminer la position d'un rayon secondaire (18) sur le photocapteur (21).

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- US 20100232677 A1

- US 4310242 A